# EUROPEAN PATENT APPLICATION

(11) **EP 2 282 068 A1**
(43) Date of publication of application: **09.02.2011**
(21) Application number: 10170736.2
(22) Date of filing: 26.07.2010
(51) Int. Cl.: F16B 12/40, A47B 96/14

(54) **Section and assembly consisting of said section and a structural joining device for forming complex structures**

(30) Priority: 29.07.2009 IT MI20091347
(71) Applicant: Level Office Landscape S.r.l., 23807 Merate (LC) (IT)
(72) Inventor: Gianquitto, Massimo, 23807, Merate (LC) (IT)
(74) Representative: Raimondi, Margherita

(57) **Abstract**

Tubular section characterized in that it has an inner profile with a top seat (110) and a bottom seat (120) extending in a transverse direction (Y-Y) and with respective bottom surfaces (110a,120a) which are parallel to each other and perpendicular to a vertical transverse direction (Z-Z), along the two circle segments (100b) situated between the two seats (110, 120) and symmetrical with respect to the longitudinal direction X-X there also being provided two inclined contact shoulders (140) converging from the outside towards the inside in the direction of the bottom seat (120) and adjacent to the latter, as well as two recesses (160) situated between the said surfaces (140) and the opposite flanks of the top seat (110).

## Description

The present invention relates to a shaped section and an assembly consisting of said section and a structural joining device for forming complex structures.

It is known in the technical sector relating to the manufacture of furniture components of various kinds that there exists a need to have a small number of modular components which can be joined together simply and rapidly in order to make up frames which may also have widely varying forms, for example tables, shelving, bookshelves and the like.

The technical problem which is posed, therefore, is to provide modular structural components which can be assembled together to form frames of furniture units and the like, which are light, easy and inexpensive to produce, small in size, easy and inexpensive to assemble, and able to be easily installed by any user using normal standard connecting means.

In the context of this problem it is also required that the structural components should have an external appearance such as to allow easy adaptation to the wide range of environments and styles of furniture.

These results are achieved according to the present invention by a shaped section having the characteristic features described in Claim 1 and an assembly consisting of said section and a structural joining device for forming complex structures according to the characteristic features of Claim 7.

Further details may be obtained from the following description of a non-limiting example of embodiment of the subject of the present invention provided with reference to the accompanying drawings in which:
- Figure 1 shows: a cross-sectional view of a first embodiment of a section according to the present invention;
- Figure 2 shows: a cross-sectional view of the section according to Fig. 1 with a reinforcing element housed inside the associated seat;
- Figure 3 shows: a cross-sectional view of a second embodiment of a section according to the present invention;
- Figure 4 shows: an exploded view of a structural joining device with the section according to Fig. 3;
- Figure 5 shows: a cross-sectional view along a longitudinal plane of the joining device according to Fig. 4 in the assembled condition;
- Figure 6 shows: a cross-sectional view along a longitudinal plane of an upright with a structural joining device according to the present invention;
- Figure 7 shows: an enlarged view of the detail of the top and bottom structural joints of the upright according to Fig. 6;
- Figure 8 shows: a cross-sectional view along the plane indicated by VIII-VIII in Fig. 7;
- Figure 9 shows: an exploded view of a structural joining elbow piece according to the present invention;
- Figure 10 shows: a partially sectioned perspective view of the elbow piece according to Fig. 9; and
- Figure 11 shows: a cross-section along a vertical plane of an upright connected to a cross-piece by means of the elbow piece according to Fig. 9.

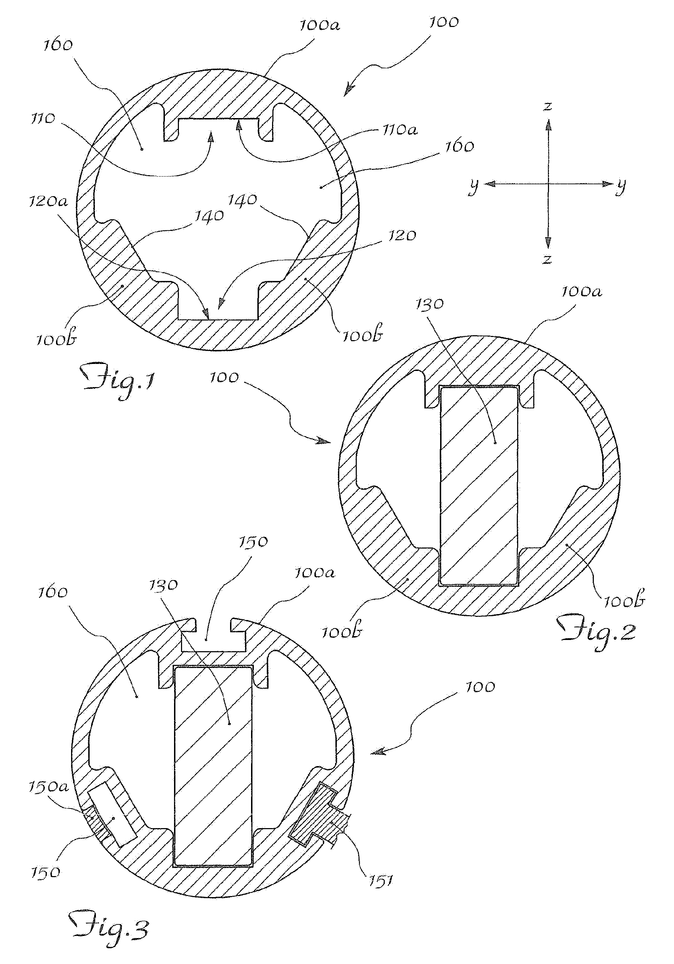

As shown in Fig. 1 and assuming solely for the sake of convenience of the description and without a limiting meaning a set of three reference axes in the longitudinal direction X-X, horizontal transverse direction Y-Y and vertical transverse direction Z-Z, respectively, a section according to the present invention comprises an extruded body 100 extending over a given length in the longitudinal direction X-X and internally hollow; the outer profile 100a of the extruded part is substantially circular, while the inner profile has a top seat 110 and a bottom seat 120 extending in the transverse direction Y-Y and having respective bottom surfaces 110a, 120a parallel to each other and perpendicular to the vertical transverse direction Z-Z; said seats are suitable (Fig. 2) for housing an element 130 for reinforcing the extruded part.

Along the two circle segments 100b situated between the two seats 110, 120 and symmetrical with respect to the longitudinal direction X-X, the inner profile of the extruded part 100 has two inclined contact surfaces 140 converging from the outside towards the inside in the direction of the bottom seat 120 and arranged adjacent to the latter, as well as two recesses 160 situated between the surfaces 140 and the top seat 110.

As shown in Fig. 3, it is also envisaged that, in a preferred embodiment, the section 100 has seats 150 which are in the form of an "inverted T" formed in the outer surface 100a, for example at an angular distance of about 120° and in a position corresponding to the top seat 110 and to the inner contact surfaces 140, and which extend radially inwards.

Said seats 150 are able to form sliding guides for auxiliary parts of various kinds which are schematically shown in Fig. 3 as an associated sliding piece 151 having a cross-section matching the shape of the seat 150.

Alternatively, the seats 150 may be closed by a cover 150a so as to restore the continuity of the outer surface of the extruded part.

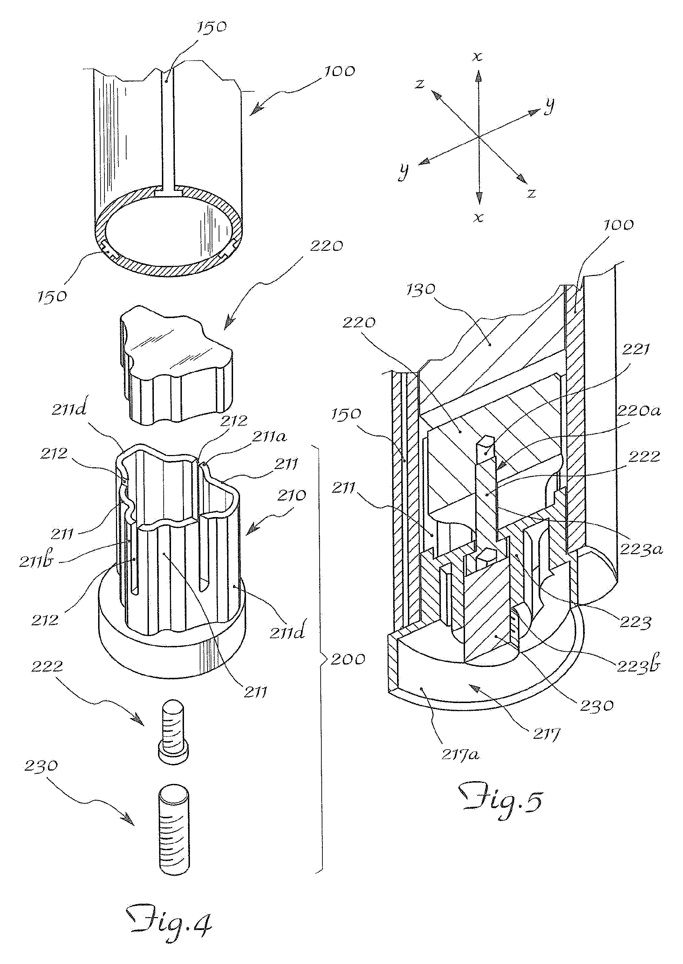

According to the invention it also envisaged that the extruded part 100 may be combined with a structural fastening device 200 comprising essentially (Fig. 4):
- a female insert 210 formed by shaped fins 211 extending over a suitable longitudinal portion X-X and separated from each other by longitudinal incisions 212 designed to allow the elastic deformation thereof in the transverse direction; said fins 211 have an arrangement such as define a substantially triangular form allowing insertion inside the extruded part in a single relative position.

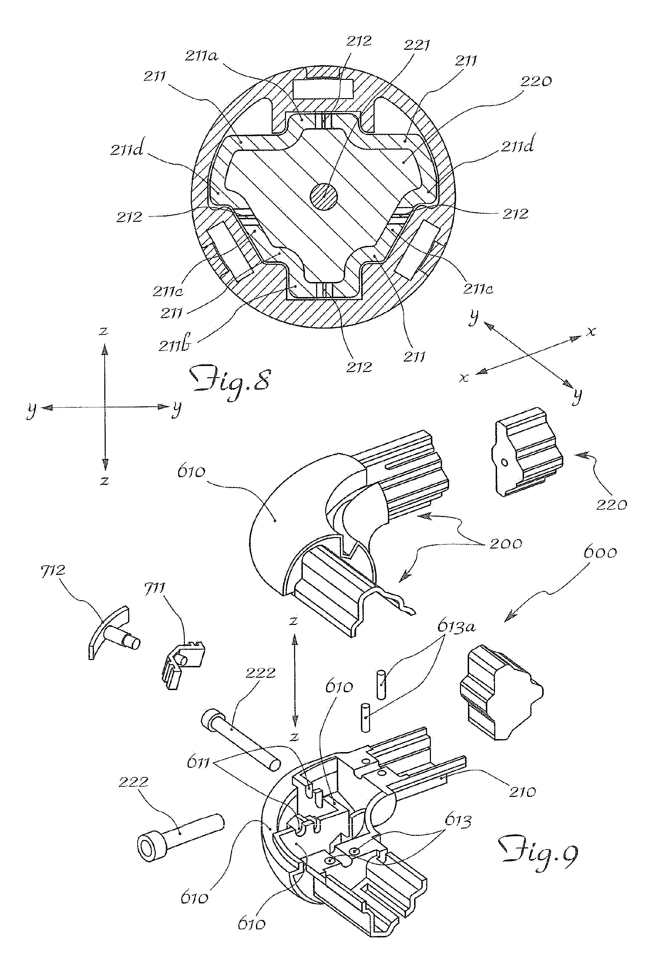

In greater detail (Fig. 8) and with the directional arrangements shown by way of example in the figures, said substantially triangular form of the female insert 210 has a first, main, top projection 211a, suitable for insertion inside the top cavity 110 of the extruded part, a bottom vertex-like projection 211b suitable for insertion inside the bottom seat 120 of the extruded part, and two shoulders 211c which are symmetrically arranged with respect to the bottom vertex-like projection 211b and with an inclination from the outside towards the inside, parallel to that of the inclined surfaces 140 inside the extruded part 100, and two transverse projections 211d suitable for insertion inside the internal recesses 160 of the extruded part;
- a wedge-like male member 220 with a shape matching the internal shape of the female insert 210, suitable for insertion inside the latter and provided with a coaxial hole 221 having an axial female thread 221a; said wedge 220 therefore having projections 221a, 221b, 221c suitable for insertion inside the respective cavities formed by the projections 211a, 211b, 211c of the female insert 210 and inclined surfaces 240 parallel to the contact shoulders 140 of the said female insert;
- an operating screw 222 suitable for mating with the female thread 221a of the wedge 220 so as to cause displacement thereof in both senses in the longitudinal direction X-X.

The female insert 210 also has an end collar 215 having, formed therein, a first coaxial seat 216, the inner base 216a of which has a through-hole 216c for the screw 222, the head of which reacts against the said base; the seat 216 also has a female thread 216c suitable for mating with a grub screw 230 for adjusting the distance of a closing element 410, 420 described below.

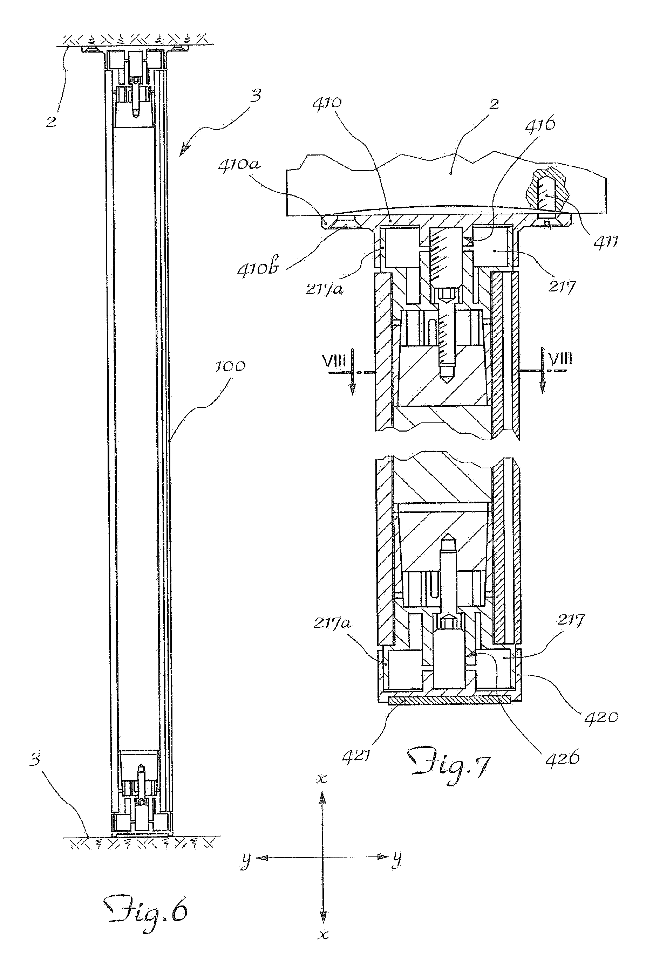

A second seat 217 of greater diameter is also formed concentrically with the first coaxial seat 216, being formed by an annular edge 217a which extends outwards, parallel to the longitudinal direction X-X and being suitable for mating with an end closing element as shown in Figs. 6 and 7 described further below.

By means of the extruded section 100 and the assembly device 200 it is therefore possible to form various structural assemblies shown by way of example in Fig. 6 as an upright 3 formed by an extruded part 100 of suitable length corresponding to the distance between the floor 1 and ceiling 2; as illustrated in the enlarged details of Fig. 7, the opposite ends of the upright are joined to the already-described assembly device 200 which is closed at the top by a flange 410 mounted on the annular end edge 217a of the female insert 210 and provided with a flat disc 410a of larger diameter having, formed therein, through-holes 410b for receiving screws 411 for fixing to the ceiling 2.

On the floor 1, the upright 3 has a second assembly device 200 which is closed by a foot 420 suitable for mounting on the annular edge 217a and provided with a non-slip base 421.

Both the flange 410 and the foot 420 have a respective coaxial inner seat 416, 426 suitable for forming an interference fit with the adjusting grub screw 230 which may thus be rotationally operated in both directions in order to take up any play and bring the flange and the foot into contact with the respective reaction surface.

With the configuration described the operating principle of assembly device is as follows:
- a section 100 of suitable length in the longitudinal direction, for example suitable for forming the upright shown in Fig. 3, is provided;
- the structural joining device 200 is preassembled by inserting the wedge 220 longitudinally inside the female insert 210, inserting the screw 22 into its associated seat 216 and then screwing it onto the female thread 221a in the hole 221 of the wedge 220;
- the device 200 is inserted in the longitudinal direction inside the section 100, aligning the projections 211a,b,c with the respective seats 110, 120 and with the inclined surfaces 140 and pushing inwards until the collar 217a comes into contact against the section;
- the screw 222 is tightened so as to force the wedge to be displaced towards the head, deforming the fins 211 which grip against the corresponding inner surfaces of the section which make relative contact;
- the opposite ends 217 are closed with the respective top fixing flange 410 or bottom fixing flange 420 so as to form the foot resting on the ground;
- the foot flange is rotated in either direction in order to adjust the grub screw 230 and obtain the correct level positioning on the ceiling/floor.

Fig. 9 shows another embodiment of the assembly device according to the invention applied to both the ends of a connecting element shown by way of example in the form of an elbow piece 600.

Operation of the device is entirely similar to that already described; the elbow piece 600, however, comprises a number of functional parts able to ensure correct functioning of the joint with two sections 100 arranged at 90° with respect to each other.

In detail, said elbow piece 600 comprises two half-shells 610, each of which has an end integral with a half female insert 210 and two half-shoulders 611 having a through-hole 611a in the longitudinal direction X-X for receiving the operating screw 222 and two inset zones 612 suitable for housing a bracket 711 for retaining a closing cover-piece 712; the half-shells 610 are also provided with seats 613 for receiving pins 613a for joining together the two half-shells.

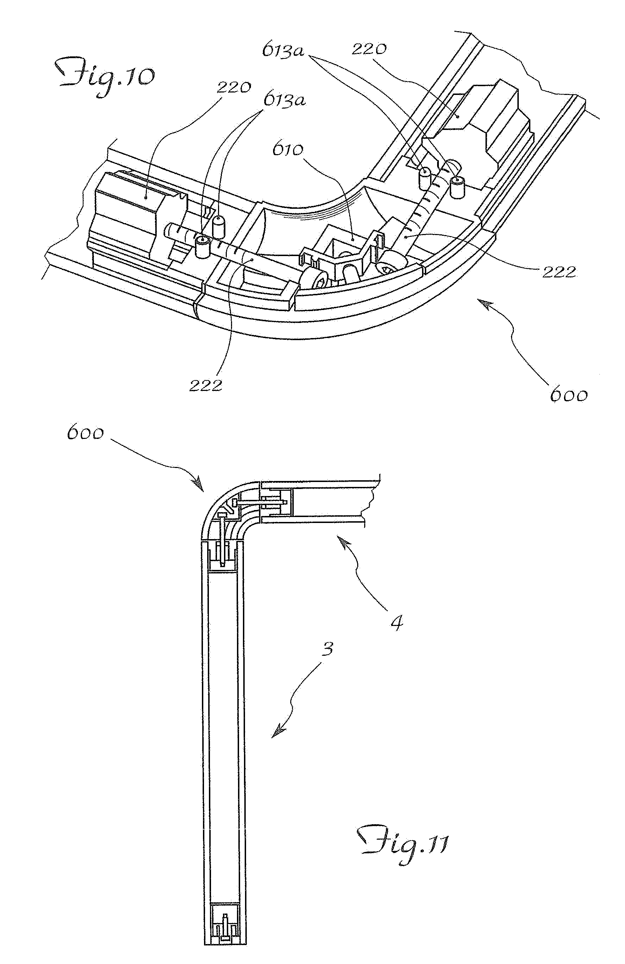

As shown in Fig. 11 the elbow piece 600 allows assembly, in a manner entirely similar to that already described, of an upright 3 with a cross piece 4 for forming complex supporting structures. Although not shown, it is also envisaged that the connecting element may be in the form of a T, a cross, a star or the like for forming complex structural joints.

It is clear, therefore, how the section and the assembly device according to the invention form simple modular elements which can be rapidly produced at a low cost and can be easily assembled also by non-specialized users so as to form simple structures such as uprights and/or units such as tables, shelving and the like.

In addition, owing to the particular asymmetrical form of the section and the joint, a relative connection in a single angular position is possible in such a way as to restore also the continuity of the solid sections and empty spaces visible from the exterior.

Although described in connection with certain constructional forms and certain preferred examples of embodiment of the invention, it is understood that the scope of protection of the present patent is defined solely by the following claims.

## Claims

1. Tubular section **characterized in that** it has an inner profile with a top seat (110) and a bottom seat (120) extending in a transverse direction (Y-Y) and with respective bottom surfaces (110a,120a) which are parallel to each other and perpendicular to a vertical transverse direction (Z-Z), along two circle segments (100b) situated between the two seats (110, 120) and symmetrical with respect to the longitudinal direction X-X there also being provided two inclined contact shoulders (140) converging from the outside towards the inside in the direction of the bottom seat (120) and adjacent to the latter, as well as two recesses (160) situated between the said surfaces (140) and the opposite flanks of the top seat (110).

2. Section according to Claim 1, **characterized in that** said seats (110,120) are suitable for housing an element (130) for reinforcing the extruded part, extending in the longitudinal direction (X-X).

3. Section according to Claim 2, **characterized in that** said reinforcing element (130) extends over a length in the longitudinal direction, less than the length of the section (100) itself.

4. Section according to Claim 1, **characterized in that** the outer profile (100a) of the extruded part is substantially circular.

5. Section according to Claim 1, **characterized in that** it has seats (150) in the form of an "inverted T" formed in the outer surface (100a) and extending radially inwards.

6. Section according to Claim 5, **characterized in that** it comprises covers (150a) for closing the said seats (150).

7. Assembly consisting of a tubular section (100) and a matching structural joining device (200), **characterized in that** said section is formed in accordance with Claim 1.

8. Assembly according to Claim 7, **characterized in that** said structural joining device (200) comprises:
- a female insert (210) formed by shaped fins (211) extending over a suitable longitudinal portion X-X and separated from each other by longitudinal incisions (212) designed to allow the elastic deformation thereof in the transverse direction (Y-Y, Z-Z), the configuration of said fins (211) defining a first projection (211a) suitable for insertion inside the top seat (110) of the extruded part, a second projection (211b) suitable for insertion inside the bottom seat (120) of the extruded part, and two shoulders (211c) which are symmetrically arranged with respect to the second bottom projection (211b) and with an inclination from the outside towards the inside, parallel to that of the inclined surfaces (140) inside the extruded part (100), and two transverse projections (211d) suitable for insertion inside the internal recesses (160) of the extruded part (100);
- a wedge-like male member (220) with a shape matching the internal shape of the female insert (210), suitable for axial insertion (X-X) inside the latter and provided with a coaxial hole (221) having a female thread (221a);
- an operating screw (222) suitable for mating with the female thread (221a) of the wedge (220) so as to cause displacement thereof in both senses in the longitudinal direction (X-X).

9. Assembly according to Claim 8, **characterized in that** the female insert (210) has an end collar (215) having, formed therein, a first coaxial seat (216), the inner base (216a) of which has a through-hole for the said operating screw (222).

10. Assembly according to Claim 9, **characterized in that** the seat (216) has a female thread (216b) suitable for mating with a grub screw (230).

11. Assembly according to Claim 9, **characterized in that** a second seat (217) of greater diameter, delimited by an annular edge (217a) which extends outwards, parallel to the longitudinal direction (X-X), is also formed concentrically with the first coaxial seat (216).

12. Assembly according to Claim 11, **characterized in that** said annular edge (217a) is suitable for mating with an end closing element (410,420).

13. Assembly according to Claim 12, **characterized in that** said end closing element (410,420) has a coaxial inner seat (416,426) suitable for forming an interference fit with the adjusting grub screw (230).

14. Assembly according to Claim 12, **characterized in that** said end closing element is a flange (410) provided with a flat disc (410a) which has a diameter greater than that of the section and in which through-holes (410b) for receiving fixing screws (411) are formed.

15. Assembly according to Claim 12, **characterized in that** said end closing element is a foot (420) suitable for mounting on the annular edge (217a) and provided with a non-slip base (421).

16. Assembly according to Claim 7, **characterized in that** it is in the form of a connecting element.

17. Assembly according to Claim 16, **characterized in that** said connecting element is an elbow piece (600).

18. Assembly according to Claim 17, **characterized in that** said elbow piece (600) comprises two half-shells (610), each of which has opposite ends integral with a half female insert (210), the half-shells being provided internally with two half-shoulders (611) having a through-hole (611a) in the longitudinal direction (X-X) for receiving the operating screw (222).

19. Assembly according to Claim 17, **characterized in that** said elbow piece (600) has two inset zones (612) suitable for housing a bracket (711) for retaining a cover piece (712) for closing the outer surface.

20. Assembly according to Claim 17, **characterized in that** said elbow piece (600) in the half-shells (610) is provided with seats (613) for receiving pins (613a) for joining together the two half-shells.

21. Assembly according to Claim 16, **characterized in that** said connecting element is in the form of a T, cross or star.

22. Assembly according to Claim 7, **characterized in that** the asymmetrical form of the internal cavity of the section (100) and the device (200) is suitable for allowing joining together in a single angular position.
